# EUROPEAN PATENT APPLICATION

(11) **EP 4 632 211 A1**
(43) Date of publication of application: **15.10.2025**
(21) Application number: 25167790.2
(22) Date of filing: 01.04.2025
(51) Int. Cl.: F02D 41/22, F02D 41/24, F02D 41/38

(54) **DEVICE FOR DETECTING A LEAKAGE IN A FUEL PATH OF AN ENGINE**

(30) Priority: 10.04.2024 DE 102024110012
(71) Applicant: Liebherr-Components Colmar SAS, 68025 Colmar Cedex (FR)
(72) Inventor: BLEICHNER, Nicolas, 68000 Colmar (FR); WIRTHS, Stefan, 3185 Schmitten (CH)
(74) Representative: Behr, Wolfgang

(57) **Abstract**

The present invention shows a device for detecting a leakage in a fuel path of a fuel delivery system of an engine (1), the fuel delivery system preferably being a common rail fuel delivery system, the device comprising: a volume control valve (2) for controlling a flow of the fuel into the fuel path toward the engine, and an electronic control unit, the electronic control unit being configured to determine a fuel quantity (5) of the fuel to be injected into a combustion chamber of the engine (1), control the volume control valve (2) by providing a control variable for controlling the volume control valve (2) in a feedback loop to maintain a desired pressure inside the fuel path, and compare the control variable with a reference value, which is determined based on the fuel quantity, in order to detect a leakage in the fuel path, wherein the electronic control unit is configured to determine an actual operating point (4) of the volume control valve (2) for at least one fuel quantity (5) and to adjust and/or determine at least one reference value used for leakage detection based on the actual operating point (4).

## Description

The present invention relates to a device for detecting a leakage in the fuel path of an engine, the engine comprising a fuel delivery system such as a common rail fuel delivery system, comprising a fuel path and a volume control valve for controlling the flow of the fuel into the fuel path towards the engine.

If a leak occurs in the fuel path, this can lead to severe problems that may cause the engine to fail completely and endanger people in the vicinity, because a leakage, especially in the high-pressure part of the fuel delivery system, will lead to high leakage rates.

Therefore, it is important that a leakage in the fuel path is detected quickly and reliably to avoid potential damage to the engine and hazards to the environment and any people in the vicinity.

According to a prior art solution described in DE 19704981 A1, the pressure in the common rail is detected at two consecutive points in time, and compared with an expected pressure change. The expected pressure change is determined based on fuel quantity of the fuel to be injected into the combustion chamber of the engine and therefore leaving the common rail, as well as the fuel quantity provided by the pressure pump to the common rail.

Further, one solution tested by the inventors of the present invention is to use a control variable for controlling a volume control valve for leakage detection, by comparing the actual control value determined by a feedback loop with a pre-control value determined based on the fuel quantity.

However, these previous approaches have not provided a sufficient sensitivity of the leakage detection.

An object of the present invention is therefore to provide a device for detecting a leakage in a fuel path of an engine having an increased sensitivity.

This object is solved by a device according to claim 1. Preferred embodiments of the present invention are the subject-matter of the dependent claims.

The present invention provides a device for detecting a leakage in a fuel path of a fuel delivery system of an engine, the fuel delivery system preferably being a common rail fuel delivery system, the device comprising a volume control valve for controlling a flow of the fuel into the fuel path toward the engine, and an electronic control unit, the electronic control unit being configured to determine a fuel quantity of the fuel to be injected into a combustion chamber of the engine, control the volume control valve by providing a control variable for controlling the volume control valve in a feedback loop to maintain a desired pressure inside the fuel path, and compare the control variable with a reference value, which is determined based on the fuel quantity, in order to detect a leakage in the fuel path. The present invention is characterized in that the electronic control unit is configured to determine an actual operating point of the volume control valve for at least one fuel quantity and to adjust and/or determine at least one reference value used for leakage detection based on the actual operating point.

The inventive device is therefore based on comparing the control variable actually used for the volume control valve with a reference value, with the reference value for example being an expected value of the control variable for the fuel quantity to be injected into the combustion chamber.

Because the control variable is a measure for the fuel quantity that is flowing into the fuel path, and the reference value is a measure for an expected value for the fuel flowing out of the fuel path, deviation between the control variable and the reference value is an indicator of a leakage in the fuel path, because more fuel is flowing into the fuel path than fuel is injected into the combustion chamber of the engine.

For example, the difference between the control variable and the reference value can be compared to a threshold value, and if the threshold value is exceeded, a leakage is detected and an alarm condition is started.

By using the control variable of the control valve for leakage detection, the leakage detection does not need any sensors and can therefore be provided efficiently. However, the inventors of the present invention realised that the actual operating points of volume control valves have a great variance, i.e. that different volume control valves will provide different fuel quantities for the same control variable or need different values for the control variable to provide the same fuel quantity. Therefore, if the same reference values are used for every engine of a series, very high threshold values will be necessary in order to avoid false detections, decreasing the sensitivity of the system.

Therefore, the electronic control unit on the present invention will adjust and/or determine at least one reference value based on an actual operating point of the volume control valve. Thereby, the detection system can be calibrated online during operation of the engine to the specifics of the volume control valve used in the engine and in particular to its operating point.

Therefore, instead of using the same reference values for each engine of a series, the reference value is calibrated for each engine and/or each volume control valve, in order to take into account the dispersion in the operating points of different volume control valves. Because of this calibration, threshold values used for the detection of a leakage can be significantly reduced, thereby increasing the sensitivity of the detection.

In an embodiment of the present invention, the electronic control unit is configured to determine and store a plurality of reference values for a plurality of operating points of the volume control valve.

In an embodiment of the present invention, an operating point of the volume control valve is defined by the actual value of the control variable used by the electronic control unit for controlling the volume control valve for a specific fuel quantity to be injected into the engine, and preferably by the control variable used for a specific fuel quantity to be injected per stroke or engine cycle at a specific engine speed.

In an embodiment of the present invention, the electronic control unit is configured to calculate a pre-control variable to pre-control the volume control valve based on the fuel quantity to be injected, and adapt the pre-control variable to provide the actual control variable used for controlling the volume control valve in a feedback loop to maintain the desired pressure inside the fuel path.

The difference between the pre-control variable and the control variable is, in principle, a measure for leakage of the fuel path, because the control value describes the actual fuel quantity delivered into the fuel path, and the pre-control variable describes the expected fuel quantity delivered into the fuel path, corresponding to the fuel to be injected into the combustion chamber and therefore flowing out of the fuel path on the engine side. However, the pre-control variable usually does not take into account the differences in an actual operating point of different volume control valves, but is simply provided by a table or map that is the same for every volume control valve.

Therefore, according to the present invention, instead of using a pre-control variable determined independently of the specific volume control valve concerned as a reference value, the present invention uses a reference value determined or adjusted based on the actual operating point of the volume control valve concerned.

In a first variant of the present invention, the reference value is only used for detecting a leakage, but not for control.

In an alternative variant, the reference value is also used for control, and in particular as a pre-control variable. Thereby, in addition to calibrating the detection system, the present invention also calibrates the control system to the volume control valve concerned.

In an embodiment of the present invention, the electronic control unit is configured to detect a steady state operation of the fuel delivery system and to determine the actual operating point of the volume control valve during the steady state, wherein the steady state is preferably defined by a constant control variable for controlling the volume control valve and a constant fuel quantity, and preferably a constant engine speed, a constant pressure inside the fuel path and/or a pressure control valve being closed.

In an embodiment of the present invention, the electronic control unit is adapted to store a data set comprising a plurality of data points each defining a reference value for a range of an engine speed and a range of a fuel quantity per stroke or engine cycle, wherein in particular the data set is a three-dimensional data set and/or each data point is a triple.

In an embodiment of the present invention, the ranges of an engine speed and/or fuel quantity per stroke or engine cycle of the plurality of data points vary in size across the data set, preferably wherein the ranges are smaller in typical operating regions of the engine than outside these regions, wherein the ranges are preferably adapted during operation of the engine.

In an embodiment of the present invention, the electronic control unit is designed, after detection of the actual operating point of the volume control valve, also to adjust the reference values of data points adjacent thereto.

In an embodiment of the present invention, the data set defines an associated reference value for a cell, i.e. a specific engine speed range and a specific fuel quantity range, wherein preferably the reference value in a respective cell is given as a plane equation.

In an embodiment of the present invention, the electronic control unit is provided with a non-volatile memory in which the reference values for leakage detection are stored.

In an embodiment of the present invention, the electronic control unit may be configured to determine and/or adjust the reference values during a first operation of the engine and store the reference values in the non-volatile memory, in order to initialize the leakage detection. In particular, the electronic control unit may be provided with an initialisation mode in which the reference values, which are later on used during a leakage detection mode, are determined.

Further, the electronic control unit may be configured, after a reference value has been adjusted or determined based on a first determination of an actual operating point of the volume control value, to re-adjust the reference value on the basis of a new determination of an actual operating point of the volume control valve. Thereby, the electronic control unit can adapt the leakage detection to slow changes in the behaviour of the volume control valve or the fuel delivery system in general, such as an increase in leakage.

Preferably, a readjustment of a reference value is initiated if the control variable differs from the reference value, but the difference is below the threshold value for detecting leakage, and/or if the difference between a previous reference value and the current control value is within a corridor that is defined in dependence on the timespan and operating hour span between the determination of the previous reference value and the control variable. Alternatively or in addition, a readjustment of a reference value is initiated at regular intervals.

In a further embodiment, the reference values may also be updated based on a time and/or operating hour difference between the date when the reference value was determined, and a current date based on a predetermined rule. This equally allows to take into account aging behaviour.

In an embodiment, the reference value may be determined anew whenever the engine is switched on. Thereby, the reference values do not need to be stored in a non-volatile memory, may be stored in volatile memory.

In an embodiment of the present invention, the electronic control unit is configured such that a leakage is detected if the difference between the actual control variable used for controlling the volume control valve and the reference value exceeds a threshold value.

In an embodiment of the present invention, the electronic control unit is configured to shut down operation of the fuel delivery system on detection of a leakage.

In an embodiment of the present invention, the fuel delivery system is a common rail fuel delivery system, and the fuel path is a high pressure fuel reservoir of the common rail fuel delivery system, wherein the volume control valve controls a fuel amount pumped by a high pressure pump into the high pressure fuel reservoir.

The fuel delivery system may further comprise a low pressure pump, which is preferably arranged upstream of the volume control valve, and/or a pressure control valve.

The present invention further comprises a combustion engine comprising a device as defined above.

The combustion engine may, for example, be an engine having at least twelve cylinders. In such large engines, the amount of fuel injected into the cylinders of the engine is high, such that a leakage in the fuel delivery system will lead to high amounts of fuel being spilled, such that the present invention is of particular importance for such engines.

The combustion engine may, for example, be a V-type combustion engine. It may comprise separate fuel delivery systems for each bank of the V-type engine, each equipped with an inventive device for detecting a leakage in the respective fuel delivery system.

The present invention further comprises a working machine comprising a device and/or a combustion engine as defined above. The working machine may, for example, be a mobile working machine, such as an excavator, a train or a crane, or a stationary working machine, such as a generator where the combustion engine drives a generator to generate electric energy.

Further features, details and advantages of the invention will be apparent from the following figures and embodiments.

The figures show:
- Fig. 1:: a schematic diagram of an embodiment of a fuel delivery system according to the present invention,
- Fig. 2:: a diagram showing the large variance of volume control valves with respect to their control variable,
- Fig. 3:: a schematic diagram showing threshold values used for leakage detection system in a comparative example,
- Fig. 4:: a fuel quantity - control variable diagram to illustrate undetectable leakage at a threshold value used in the comparative example,
- Fig. 5:: a schematic diagram for calculating reference values in a leak detection system according to the present invention,
- Fig. 6:: a fuel quantity - control variable diagram to illustrate undetectable leakage according to the present invention,
- Fig. 7:: a schematic diagram for adjusting or setting the reference value of a control variable for leakage detection according to the present invention,
- Fig. 8:: a schematic representation of a three-dimensional data set providing the reference values for different fuel quantities per stroke and engine speed, and
- Fig. 9:: a schematic representation showing a control routine for calibrating and operating the leakage detection.

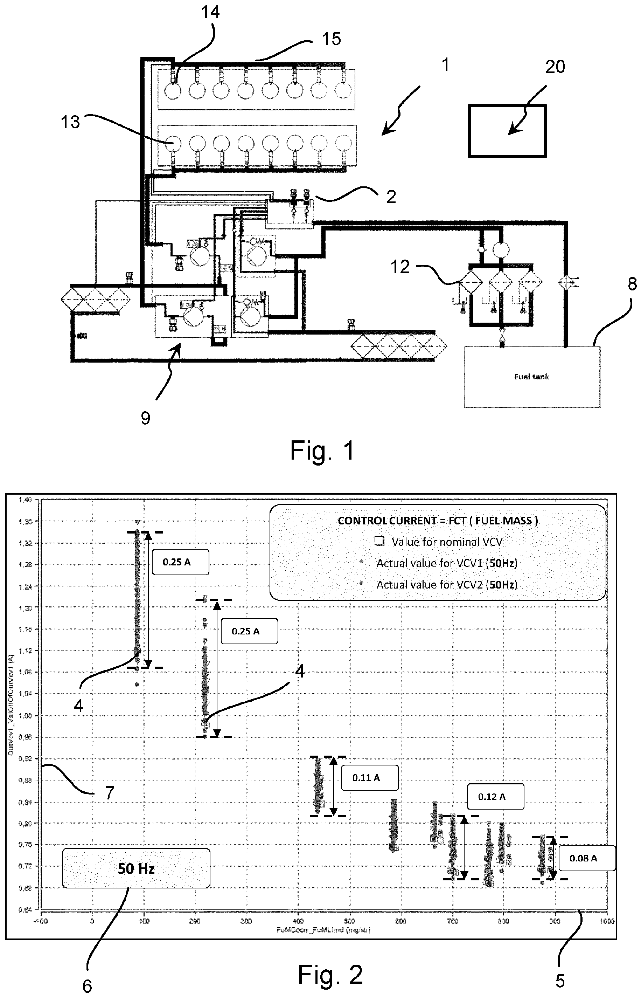

Fig. 1 shows a schematic representation of a common rail fuel delivery system for an engine 1 according to the invention, the engine comprising at least one combustion chamber 13. In the embodiment, the engine is a 16-cylinder engine having 16 cylinders 13, each of which can be supplied with fuel by an associated fuel injector 14. The present invention can also be applied to engines having a different number of cylinders, in particular to engines having 12 cylinders or more, in particular 16 cylinders or more.

Starting from the fuel tank 8, fuel is pumped via filter 12 by a two-stage pump arrangement 9 towards a high pressure reservoir 15 to which a plurality of injectors 14 is connected. Between the first and the second stage of the pump arrangement 9, a volume control valve 2 is provided to control the amount of fuel flowing from the fuel tank 8 into the high pressure reservoir 15.

An engine control unit 20 controls the volume control valve 2 to maintain the pressure inside the high pressure reservoir 15 at a desired pressure.

The engine control unit 20 determines, based on engine parameters such as engine speed and a control input, such as a driver input, a fuel quantity to be injected into the combustion chambers 16 of the engine, and controls the injectors accordingly. Further, the engine control unit determines a pre-control variable for a pre-control the volume control valve 2 based on the fuel quantity. The pre-control variable can be read e.g. from a table stored in the engine control unit. Further, it determines a control variable for the by feedback control of the volume control valve 2 for based on the pressure measured inside the high pressure reservoir 15.

Further, a pressure control valve (not shown) may be provided on the high pressure reservoir that opens towards the tank if the pressure inside the high pressure reservoir raises above the desired pressure.

In the embodiment shown, the engine is a V-type engine having two cylinder banks, with each bank having its own fuel delivery system.

In order to detect a leak along the fuel path and in particular on the high pressure side of the fuel delivery system(s), the engine control unit makes a comparison between the fuel quantity flowing through the (respective) volume control valve 2 and the fuel quantity injected to the corresponding combustion chambers 11. If the difference is too great, the presence of a leak is detected and the engine is deactivated to prevent more serious damage.

To avoid the need for sensors, as a parameter for the flow through the volume control valve 2, the control variable of the feedback control of the volume control valve 2 is used, such as the applied control voltage or control current. Further, a reference value corresponding to the fuel quantity injected, which is compared to the control variable, is determined based on the fuel quantity determined by the engine control unit and used to control the injectors.

In principle, the pre-control value could be used as the reference value. However, as can be seen from Fig. 2, the amount of fuel passing the volume control valve 2 at a specific value of the control variable is subject to a very large variance, since a specific value of the control variable can result in very different flow rates when being applied to different volume control valves.

To visualize this, Fig. 2 shows a diagram in which the abscissa indicates the amount of fuel 5 dispensed in milligrams per engine cycle and the ordinate indicates the control variable 7 in the form of a control current. The required control current was measured for different valves, whereby it can be seen that in the range of a low delivered fuel quantity, the necessary control current required for reaching the desired quantity can fluctuate very widely when using different volume control valves. It can be seen that at a delivery of 100 mg per operating cycle, some valves only require a control current of 1.09 A and other valves 1.34 A resulting in a range of about 0.25 A. The range of 0.25 A is caused by the high variance of volume control valves with respect to their control variable.

A leakage detection based on reference values fixedly stored in the engine control unit and used for the entire engine series must therefore at least take into account the typically occurring variance in the control current, since otherwise an error message will be generated although no leakage has actually occurred.

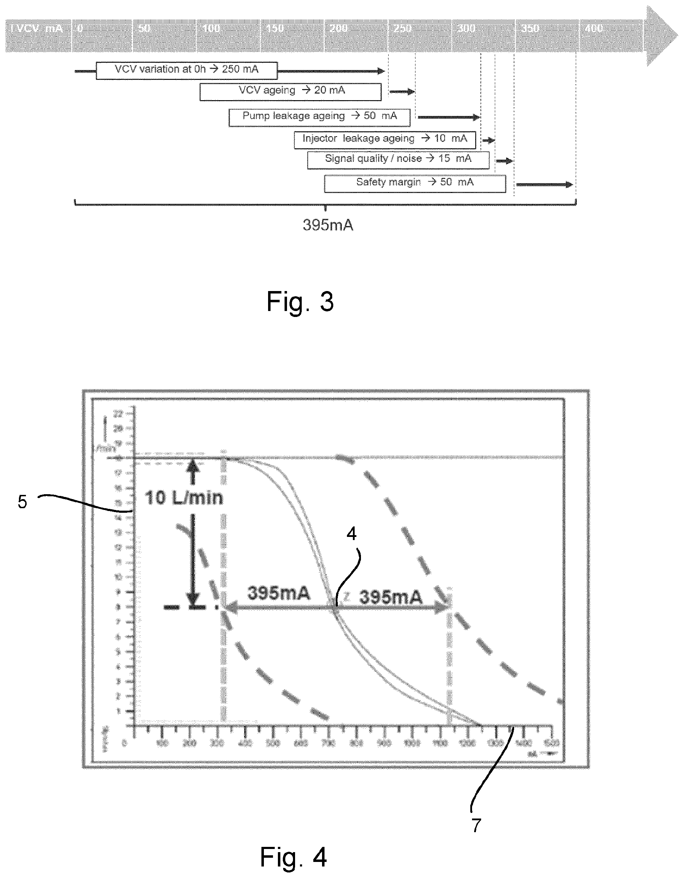

Fig. 3 also shows further factors which have to be taken into account if fixed reference values are used for leakage detection, whereby first of all the variance of 250 mA derived from Fig. 2 must be taken into account. Over the operating life of the volume control valve, a further allowance of about 20 mA is added. The aging effects of the fuel injector 10 as well as the pump arrangement 9 add another 60 mA, whereby in addition to a safety margin of 50 mA, an additional 15 mA is added for the signal noise. This results in a total deviation of 395 mA.

In Fig. 4, from an actual operating point 4 in the fuel quantity (shown on the ordinate) - control variable (shown on the abscissa) diagram, the area defined by this deviation is delimited on both sides, with every value within this area having to be considered to still be within the tolerance range for a deviation of 395 mA for a leakage detection.

It can be seen that in an unfavorable case this can lead to up to 10 l/min of fuel flowing out of the fuel path as leakage in an engine, without this being detected.

It goes without saying that such a high level of leakage is not acceptable, as it entails considerable costs and potential hazards.

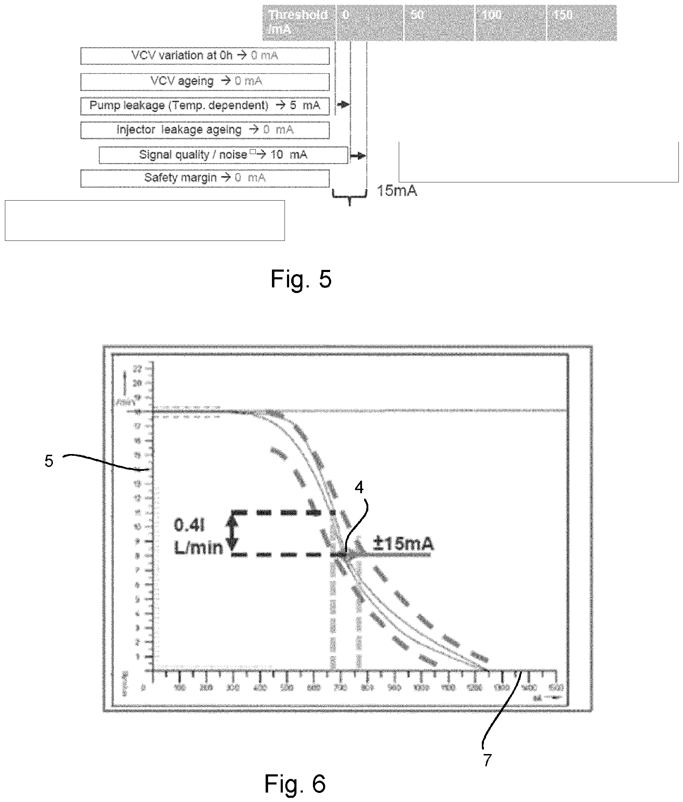

Fig. 5 shows that the invention allows a much lower threshold value for the control variable, for example of about 15 mA for the control current, of the volume control valve 2, since the variance of the control variable, which is different from motor to motor or from volume control valve 2 to volume control valve, can be eliminated. Thereby, the amount of leakage that remains undetected is much lower.

Indeed, the basic idea of the present invention is to determine the actual operating point of the volume control valve 2 used and, based thereon, to provide a reference value for leakage detection on basis of the specific actual operating point of said valve control volume. In particular, the actual control variable used at a steady state operation point of the engine for a specific fuel quantity determined by the engine control unit can be saved as a reference value associated with this fuel quantity for the further operation.

A fixed reference value, which is valid for all engines of an engine series irrespective of the actual operating point of the volume control valve, therefore no longer exists or is adapted during operation of the engine.

The present invention therefore uses at least one separate reference value for each engine (or each volume control valve), which depends on the actual operating point of the volume control valve 2 in the fuel path of the engine 1. Thus, the reference values for leakage detection are tailored to the volume control valve used in the fuel path.

In addition, all aging effects with respect to the pump arrangement 9, the injector 10 and also the volume control valve 2 existing at the time of calibration of the reference value are equally taken into account by calibrating the reference value on the basis of the actual operating point of the volume control valve 2.

Further, according to an advantageous embodiment of the present invention, the engine control unit is configured for determining the operating time of the device or the engine, and adjust the reference values to take into account the progressive aging of the components. Thus, for example, after the initial start-up where the reference values are calibrated, during operation of the engine, the reference values are adapted based on the operating time, e.g. in a step wise manner. Alternatively, the calibration based on the actual operating point can be repeated during operation to take into account aging effects.

Fig. 6 now shows the possible improvements in the fuel quantity - control variable diagram compared with Fig. 4 explained above. Since the threshold value that can now be used is only 15 mA instead of 395 mA, the worst-case leakage flow to be expected is 0.4 I/min instead of 10 I/min. This is a considerable improvement over the first described method and means that a leak can be detected much earlier without increasing the risk of false alarms.

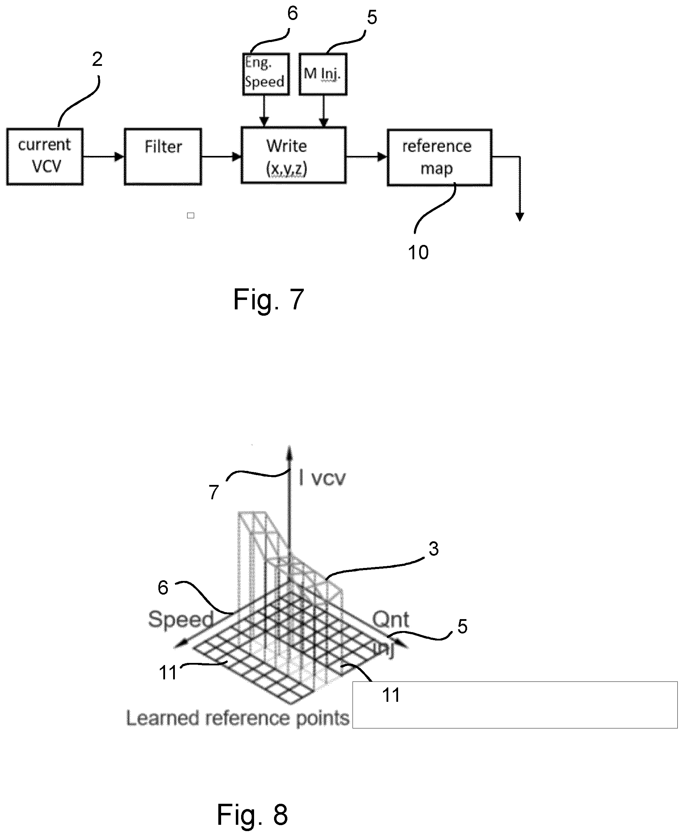

Fig. 7 shows a schematic diagram for adjusting or set the reference values of a control variable for leakage detection. The control current for the volume control valve 2 is used, whereby the control current can advantageously be subjected to filtering, and - as soon as operation of the fuel delivery system has reached a stationary state - is linked with the associated engine speed 6 and the fuel quantity 5 delivered into the combustion chamber of the engine 1 per engine stroke, so that a three-tuple is produced which represents an actual, nominal operating point in a three-dimensional data set. The reference values are determined and stored during a calibration phase or operation.

Later on, the stored control variable, i.e. the control current in this example, can now be taken as the reference value for the corresponding engine speed 6 and the fuel quantity 5 per engine stroke for leakage detection, and compared to the control variable used during engine operation.

The difference between the control variable during engine operation and the reference value is then compared to a threshold value, such as in the previous example, the threshold of 15 mA. However, the skilled person is well aware that all kinds of thresholds may be used, taking into account the peculiarities of the underlying fuel path or engine.

In order to enable reliable leakage detection also for operating points which are in close proximity to an operating point where a reference values was determined, the reference value obtained is used not only for the actual operating point, but also for an operating point range.

For example, this is done by dividing the area generated by the fuel quantity 5 per stroke and engine speed 6 into cells 11 that characterize a particular fuel quantity range and a particular engine speed range.

If the actual operating point now falls into a respective cell 11, the reference value 3 derived for the operating point is used not only for exactly the actual operating point 4, but for the cell 11 in which the actual operating point 4 lies.

Fig. 8 shows a visualization of the three-dimensional data set used for leakage detection according to the invention.

The reference value - fuel quantity - engine speed diagram shows the respective reference values 3 for an associated cell 11 rising vertically from it and being shown graphically. In areas in which no operating point has yet been determined, the diagram does not contain any reference values for the control variable of the volume control valve 2, in this case the control current. However, according to the invention it can also be provided that preset values are contained here.

According to the invention, it may also be provided that reference values in adjacent or neighboring cells are subjected to interpolation or some other mathematical procedure to avoid jumps in the transition regions of the cells.

It may further be provided that if at least three working points have been obtained in a cell, a plane equation for the cell is calculated based on the at least three working points. This improves the reference values for a working point of cell 11 that had not yet been taken in the cell and, at the same time, reduces the storage necessary for the reference values.

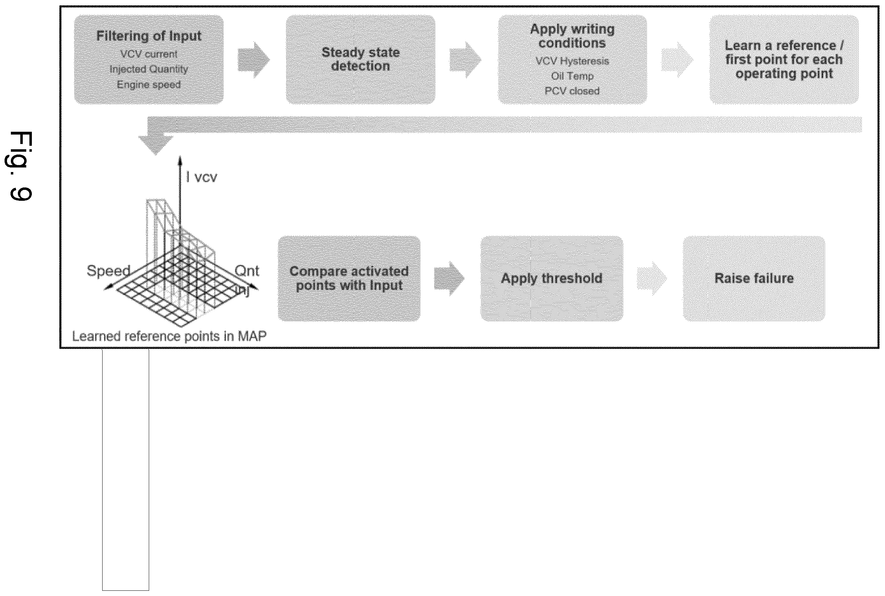

Fig. 9 shows, in a schematic diagram, both the calibration phase, as well as the leakage detection phase performed by the control unit.

In the top line, the calibration procedure is shown. The first step is the filtering of the input values, in particular the volume control valve control current used as the control variable, the injected quantity per stroke or engine cycle, and the engine speed.

As a second step, a steady state is detected. The steady state may for example comprise a state where the input values are stable.

As a third step, once a steady state is detected, it is determined whether the writing conditions apply. In particular, writing conditions apply if the pressure control valve is closed. Further, additional conditions may apply regarding oil temperature and volume control valve hysteresis.

If writing conditions apply during the steady state, a new reference point is stored for the corresponding operation point defined by the input values. The reference value may be the value of the volume control valve control variable that is detected once a steady state is detected for the first time, or maybe an averaged value over the entire duration of a steady state.

On the lower line, on the left-hand side, the reference map already shown in Fig. 8, showing the resulting reference values IVCV in dependence on engine speed and a fuel quantity per engine stroke Qnt is shown.

The lower line shows the fuel leakage detection based on the learned reference values.

In particular, in a first step, the learned reference values are compared with the current input values, to determine a difference between the current volume control valve control value and the stored reference value.

In a second step, this difference is compared to a threshold value, as shown for example in Fig. 5.

If the difference is outside of the threshold, in step 3, a failure is raised and the engine is shut off.

### List of reference signs:

- 1: Engine
- 2: Volume control valve
- 3: Threshold value
- 4: Actual operating point of the volume control valve
- 5: Fuel quantity delivered to cylinders
- 6: Engine speed
- 7: Volume control valve control variable
- 8: Fuel tank
- 9: Pump section
- 10: Data set for leakage detection
- 11: Cell
- 12: Fuel filter
- 13: Cylinder
- 14: Fuel Injector
- 15: High pressure reservoir
- 20: Engine control unit

## Claims

1. Device for detecting a leakage in a fuel path of a fuel delivery system of an engine (1), the fuel delivery system preferably being a common rail fuel delivery system, the device comprising:
a volume control valve (2) for controlling a flow of the fuel into the fuel path toward the engine, and
an electronic control unit,
the electronic control unit being configured to
- determine a fuel quantity (5) of the fuel to be injected into a combustion chamber of the engine (1),
- control the volume control valve (2) by providing a control variable for controlling the volume control valve (2) in a feedback loop to maintain a desired pressure inside the fuel path, and
- compare the control variable with a reference value, which is determined based on the fuel quantity, in order to detect a leakage in the fuel path,
**characterized in that**
the electronic control unit is configured to determine an actual operating point (4) of the volume control valve (2) for at least one fuel quantity (5) and to adjust and/or determine at least one reference value used for leakage detection based on the actual operating point (4).

2. Device according to the preceding claim 1, wherein the electronic control unit is configured to determine and store a plurality of reference values for a plurality of operating points of the volume control valve (2).

3. Device according to the preceding claim 1 or 2, wherein an operating point of the volume control valve is defined by the actual value of the control variable used by the electronic control unit for controlling the volume control valve for a specific fuel quantity to be injected into the engine, and preferably by the control variable used for a specific fuel quantity to be injected per stroke or engine cycle at a specific engine speed.

4. Device according to one of the preceding claims, wherein the electronic control unit is configured to
- calculate a pre-control variable to pre-control the volume control valve (2) based on the fuel quantity (5), and
- adapt the pre-control variable to provide the control variable used for controlling the volume control valve (2) in a feedback loop to maintain the desired pressure inside the fuel path.

5. Device according to one of the preceding claims, wherein the electronic control unit being is configured to detect a steady state operation of the fuel delivery system and to determine the actual operating point (4) of the volume control valve (2) during the steady state.
In the preferred embodiment, the steady state is defined by a constant control variable for controlling the volume control valve (2) and a constant fuel quantity.
In a preferred embodiment, the steady state may also be defined by a constant engine speed, a constant pressure inside the fuel path and/or a pressure control valve being closed.

6. Device according to any one of the preceding claims, wherein the electronic control unit is adapted to store a data set comprising a plurality of data points each defining a reference value for a range of an engine speed (6) and a range of a fuel quantity (5) per stroke or engine cycle, wherein in particular the data set is a three-dimensional data set and/or each data point is a triple.

7. Device according to the preceding claim 6, wherein the ranges of an engine speed (6) and/or fuel quantity (5) per stroke or engine cycle of the plurality of data points vary in size across the data set, preferably wherein the ranges are smaller in typical operating regions of the engine than outside these regions, wherein the ranges are preferably adapted during operation of the engine.

8. Device according to any one of the preceding claims 6 or 7, wherein the electronic control unit is designed, after detection of the actual operating point (4) of the volume control valve (2), also to adjust the reference values (3) of data points adjacent thereto.

9. Device according to any one of the preceding claims 6 to 8, wherein the data set defines an associated reference value for a cell, i.e. a specific engine speed range and a specific fuel quantity range, wherein preferably the reference value in a respective cell is given as a plane equation.

10. Device according to any of the preceding claims, wherein the electronic control unit is provided with a non-volatile memory in which the reference values (3) for leakage detection are stored.

11. Device according to any of the preceding claims, wherein the electronic control unit is configured such that a leakage is detected if the difference between the actual control variable used for controlling the volume control valve (2) and the reference value exceeds a threshold value.

12. Device according to claim 11, wherein the electronic control unit is configured to shut down operation of the fuel delivery system on detection of a leakage.

13. Device according to any of the preceding claims, wherein the fuel delivery system is a common rail fuel delivery system, and the fuel path is a high pressure fuel reservoir, wherein the volume control valve (2) controls a fuel amount pumped by a high pressure pump into the high pressure fuel reservoir.

14. A combustion engine comprising a device according to one of the preceding claims.

15. Working machine comprising a device according to any one of claims 1-13 and/or a combustion engine according to claim 14.
